# EUROPÄISCHE PATENTSCHRIFT

(11) **EP 1 189 031 B1**
(45) Veröffentlichungstag und Bekanntmachung des Hinweises auf die Patenterteilung: **21.02.2007**
(21) Anmeldenummer: 01119112.9
(22) Anmeldetag: 08.08.2001
(51) Int. Cl.: G01C 21/36, B60R 16/02, G10L 21/02

(54) **Verfahren zur Verarbeitung von Audiosignalen**
Method for processing audio signals
Procédé de traitement de signaux audio

(30) Priorität: 19.09.2000 DE 10046238
(43) Veröffentlichungstag der Anmeldung: 20.03.2002
(73) Patentinhaber: ROBERT BOSCH GMBH, 70442 Stuttgart (DE)
(72) Erfinder: Schmedding, Rainer, , (DE); Gaertner, Ulrich, 31171 Nordstemmen (DE)

(56) Entgegenhaltungen:
- EP-A- 0 411 360
- EP-A- 0 729 288
- WO-A-96/27842
- DE-A- 4 106 405

## Beschreibung

### Stand der Technik

Die Erfindung geht aus von einem Verfahren nach der Gattung des Anspruchs 1. Aus der WO 96/27842 ist ein Navigationssystem bekannt, bei dem Radiosignale und Sprachsignale durch einen digitalen Signalprozessor verarbeitet werden. Mit dem digitalen Signalprozessor wird ein Spracheingabesignal dabei so zerlegt, dass eine nachfolgende Spracherkennung ermöglicht wird. Sowohl bei der Spracherkennung als auch bei der Ausgabe von anderen Audiosignalen können Störungen durch Umgebungsgeräusche auftreten, die sowohl die Spracheingabe als auch die Musikausgabe beeinträchtigen.

Die DE 41 06 405 A1 zeigt eine Geräuschunterdrückungseinrichtung, bei der eine Stimme eines Sprechers über ein Mikrofon aufgezeichnet wird und zudem ein wiederzugebendes Audiosignal auf eine Geräusch-Substmhiereinbeit gegeben wird, um von dem über das Mikrofon aufgezeichnete Signal subtrahiert zu werden. Hierdurch soll die Spracherkennung verbessert werden.

Die EP 0 411 360 A1 zeigt ein Verfahren und eine Anordnung zur Störbefreiung von Sprachsignalen. Über ein erstes Mikrofon wird ein Motorgeräusch aufgenommen. Über ein zweites Mikrofon wird ein Summensignal aus dem Geräusch im Fahrzeuginnenraum, einem Sprachkommando und einer Lautsprecherausgabe aufgenommen. Zusammen mit der Lautsprecherausgabe werden diese Signale einer Anordnung zur Störbefreiung zugeführt. Hierbei werden die Störsignale von dem Sprachsignal zur besseren Erkennung der Sprachsignale abgezogen.

### Vorteile der Erfindung

Das erfindungsgemäße Verfahren mit den Merkmalen des Anspruchs 1 hat demgegenüber den Vorteil, dass mittels einer Filtereinheit die Audiosignale einer ersten oder einer zweiten Audiosignalquelle in Abhängigkeit von einem Störsignal gefiltert werden. Durch eine Zusammenfassung der Filterung in einer Filtereinheit ist dabei nicht für jedes Audiosignal eine eigene Filtereinheit erforderlich, sondern die Filtereinheit kann für mehrere Audiosignale verwendet werden, indem mittels eines Umschalters zwischen den Audiosignalen umgeschaltet wird. Hierdurch muss ein Störsignal ebenfalls auch nur einer Filtereinheit zugeführt werden. Durch die Verwendung nur einer Filtereinheit kann ferner Bauraum gespart und damit die Kosten für eine Vorrichtung zur Verarbeitung von Audiosignalen gesenkt werden.

Durch die in den abhängigen Ansprüchen aufgeführten Maßnahmen sind vorteilhafte Weiterbildungen und Verbesserungen des im Anspruch 1 angegebenen Verfahrens möglich. Besonders vorteilhaft ist, das Frequenzspektrum des Störsignals zu ermitteln, so dass eine frequenzabhängige Filterung von Audiosignalen ermöglicht wird. Besonders vorteilhaft ist hierbei eine Fouriertransformation eines Störsignals in einem vorgegebenen Zeitabschnitt.

Weiterhin ist vorteilhaft, in Frequenzbereichen des Störsignals ein auszugebendens Audiosignal zu verstärken. Gerade in Frequenzbereichen, in denen Störgeräusche vorliegen, wird somit das auszugebende Audiosignal verstärkt, so dass nicht die gesamte Lautstärke erhöht werden muss, sondern ausschließlich in den Frequenzbereichen, in denen eine starke Störung vorliegt, eine Amplitude des Audiosignals vergrößert wird. Hierdurch wird eine gute Verständlichkeit des auszugebenden Audiosignals erreicht.

Weiterhin ist vorteilhaft, die Filterparameter von der Stellung des Umschalters und damit von dem zugeführten Signal abhängig zu machen. Damit können die Filterparameter außer von dem Störsignal auch von speziellen Eigenheiten des auszugebenden Signals abhängig gemacht werden, z.B. in Form einer Beschränkung auf das in einem Audiosignal vorhandene bzw. übertragene Frequenzband. Ist z.B. bei einer Telefonübertragung das akustische Frequenzband beschränkt, so können in übrigen Frequenzbereichen außerhalb des Nutzsignals nur Störungen auftreten.

Weiterhin ist vorteilhaft, das Störsignal über ein Mikrophon zu erfassen, da hierüber Umgebungsgeräusche erfasst werden können. Besonders vorteilhaft ist dabei, die erste Audiosignalquelle als das Mikrophon auszuführen, so dass das Mikrophon sowohl zum Erfassen eines Nutzsignals als auch zum Erfassen des Störsignals verwendet werden kann.

Weiterhin ist vorteilhaft, ein erfasstes Audiosignal in Frequenzbereichen des Störsignals abzuschwächen. In den Frequenzbereichen des Störsignals ist damit zu rechnen, dass das Störsignal das zu erfassende Audiosignal, also das Nutzsignal, überlagert, so dass eine Aufnahme dieser Frequenzbereiche nicht zu einer Erfassung eines nutzbaren Audiosignals beitragen kann. Indem die Frequenzbereiche des Störsignals abgeschwächt werden, können diese Störbereiche ausgeblendet werden. Da z.B. die menschliche Sprache einen recht weiten Frequenzbereich überdeckt, ist davon auszugehen, dass in übrigen Frequenzbereich noch ein hinreichendes Nutzsignal, z.B. für eine Spracherkennung, zur Verfügung steht.

Weiterhin ist vorteilhaft, als Störsignal ein Fahrsignal eines Fahrzeugs zu erfassen. Z.B. über die Motordrehzahl eines Fahrzeugs kann direkt auf die Lautstärke des Fahrgeräuschs und den Frequenzbereich des Fahrgeräuschs geschlossen werden. Allein durch das Fahrsignal des Fahrzeugs ist damit eine vorteilhafte Filterung von Audiosignalen möglich.

Weiterhin ist vorteilhaft, das erste Audiosignal für eine Spracheingabe und das zweite Audiosignal für eine Audioausgabe zu verwenden, da hierdurch die Spracheingabe und die Audioausgabe in einer Filtereinheit bearbeitet werden können. Besonders vorteilhaft ist dabei, dass mit der Betätigung lediglich einer Taste von einer Audioausgabe auf eine Spracheingabe umgeschaltet wird.

Weiterhin ist vorteilhaft, dass die Lautstärke eines auszugebenden Audiosignals in Abhängigkeit von dem Störsignal gewählt wird. Hierdurch können zusätzlich zu einer frequenzselektiven und damit freqeunzabhängigen Verstärkung bei einem Störsignal, das weite Frequenzbereiche überdeckt, direkt die gesamte Lautstärke für alle Frequenzbereiche verstärkt werden kann.

Weiterhin ist vorteilhaft, dass die Audiosignale digital gefiltert werden und hierdurch eine Filterung besonders hoher Qualität möglich ist.

Weiterhin ist vorteilhaft, mit hoher Frequenz zwischen der ersten und der zweiten Audiosignalquelle umzuschalten, da durch eine derartige Zeitmultiplexschaltung eine Filterung mehrerer Audiosignale beinahe gleichzeitig möglich ist, insbesondere bei einer Interpolation während der Umschaltung auf das jeweils andere Audiosignal. Hierzu ist eine Umschaltfrequenz erforderlich, die wesentlich größer , z.B. um einen Faktor 10-100, als die maximale Audio-Frequenz eines auszugebenden Audiosignals ist.

Weiterhin ist vorteilhaft, eine Vorrichtung zur Durchführung des Verfahrens in einem Halbleiterbaustein zu integrieren, der kostengünstig hergestellt und einfach verarbeitet werden kann.

### Zeichnung

Ausführungsbeispiele der Erfindung sind in der Zeichnung dargestellt und in der nachfolgenden Beschreibung näher erläutert. Figur 1 zeigt ein erstes Ausführungsbeispiel für eine Vorrichtung zur Durchführung des erfindungsgemäßen Verfahrens, Figur 2 zeigt eine erfindungsgemäße Ermittlung einer Filterung von Audiosignalen und Figur 3 eine erfindungsgemäße Filterung von Audiosignalen.

### Beschreibung des Ausführungsbeispiels

Das erfindungsgemäße Verfahren zur Verarbeitung von Audiosignalen kann in einer Vielzahl von Vorrichtungen angewendet werden, sofern bei einer Ausgabe und/oder Aufnahme von Audiodaten Störgeräusche auftreten können. Dies ist insbesondere bei jeder Art von Sprachbedienvorrichtungen beziehungsweise von Spracherkennungsvorrichtungen gegeben, bei denen durch Hintergrundgeräusche eine Spracherkennung beeinträchtigt werden kann. Insbesondere sind Hintergrundgeräusche auch in Verkehrsmitteln, so z.B. in Kraftfahrzeugen, Schienenfahrzeugen und Flugzeugen gegeben, in denen die Ausgabe von verschiedenen Audiosignalquellen, so z.B. eine Borddurchsage, ein Musikprogramm oder eine Lautsprecherausgabe eines Fernsprechgeräts, durch Störgeräusche beeinträchtigt werden kann. Im Folgenden wird ein erfindungsgemäßes Verfahren zur Verarbeitung von Audiosignalen am Beispiel einer Navigations- und Audiovorrichtung in einem Kraftfahrzeug erläutert, bei der einerseits eine Audioausgabe von Radio und Musik und andererseits eine Sprachbedienung der Navigationsvorrichtung erfolgt.

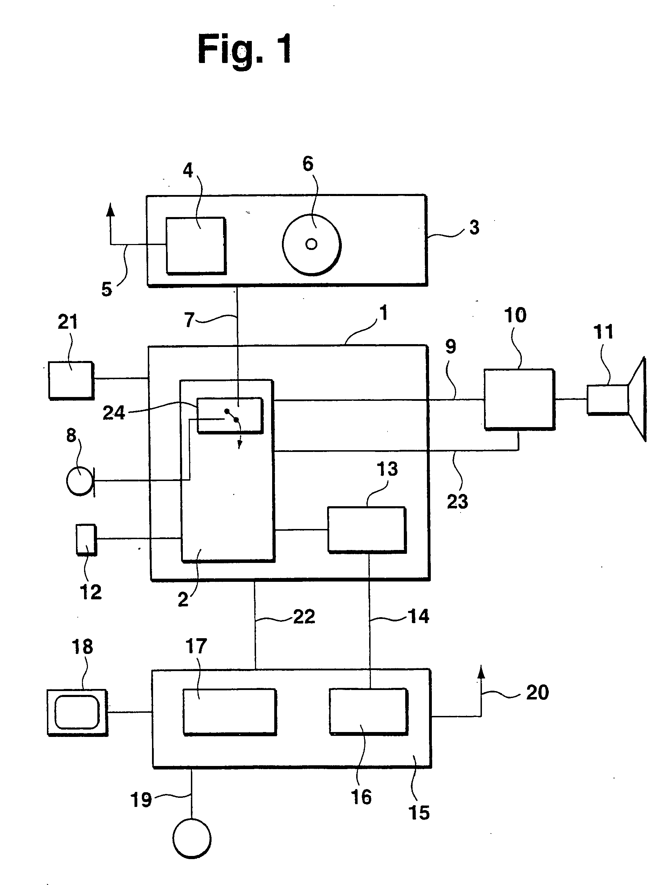

In der Figur 1 ist eine Zentraleinheit 1 mit einer Filtereinheit 2 dargestellt. Die Zentraleinheit 1 ist mit einer Audioeinheit 3 verbunden. Die Audioeinheit 3 weist einen Tuner 4 auf, der mit einer Antenne 5 verbunden ist. Ferner weist die Audioeinheit 3 ein Datenträgerlaufwerk 6 auf. Die Audioeinheit 3 ist über eine erste Datenverbindung 7 mit der Zentraleinheit 1 verbunden. Ein von der Audioeinheit 3 ausgegebenes Audiosignal wird über die erste Datenverbindung 7 an die Filtereinheit 2 weitergeleitet. Die Zentraleinheit 1 ist ferner mit einem Mikrophon 8 verbunden, mit dem ein Audiosignal erfasst werden kann. In der Filtereinheit ist ein Umschalter 24 angeordnet, der zwischen dem Audiosignal der Audioeinheit 3 und dem Audiosignal des Mikrophons 8 umschaltet. Je nach Schaltzustand des Umschalters wird dabei entweder das Audiosignal der Audioeinheit 3 oder das von dem Mikrophon 8 erfasste Audiosignal der Filterung zugeführt. Von der Filtereinheit 2 ist ein gefiltertes Audiosignal über eine zweite Datenverbindung 9 an einen Verstärker 10 gebbar. Der Verstärker 10 ist wiederum mit einem Lautsprecher 11 verbunden. Die Zentraleinheit 1 ist ferner mit einem Fahrsignalsensor 12 verbunden, von dem ein Fahrsignal an die Filtereinheit 2 weiterleitbar ist. Die Filtereinheit 2 ist ferner mit einer Merkmalserkennungsvorrichtung 13 einer Spracherkennung verbunden. Die Merkmalserkennungsvorrichtung 13 ist über eine dritte Datenverbindung 14 mit einer Navigationsvorrichtung 15 verbunden. Die Navigationsvorrichtung 15 weist eine Spracherkennungsvorrichtung 16, eine Recheneinheit 17, eine Anzeige 18, eine Speichereinheit 19 und einen GPS-Empfänger 20 auf. Über eine Taste 21, die mit der Zentraleinheit 1 verbunden ist, kann zwischen einer Ausgabe eines Audiosignals und einer Spracherkennung über das Mikrophon 8 umgeschaltet werden.

Von der Audioeinheit 3 werden mit dem Tuner 4 über den Empfang eines Rundfunksignals mittels der Antenne 5 oder durch Auslesen eines Datenträgers mit Musikdaten in dem Datenträgerlaufwerk 6 Audiodaten ermittelt, die über die erste Datenverbindung 7 an die Zentraleinheit 1 weitergeleitet werden. Die Audioeinheit 3 dient damit als eine Audiosignalquelle. Das Datenträgerlaufwerk 6 ist in einem bevorzugten Ausführungsbeispiel als ein Compakt-Disk-(CD)-Laufwerk ausgeführt zum Abspielen von Musik-CD-Datenträgern. Das Datenträgerlaufwerk 6 kann ebenso als ein sonstiges optisches und/oder magnetisches Datenträgerlaufwerk ausgeführt sein. Es ist auch möglich, mehrere Tuner beziehungsweise mehrere verschiedene Datenträgerlaufwerke in der Audioeinheit 3 vorzusehen. Das Audiosignal von der Audioeinheit 3 wird bei einer entsprechenden Schaltung des Umschalters 24 in der Filtereinheit 2 in Abhängigkeit von einem Störsignal gefiltert und anschließend an den Verstärker 10 weitergeleitet, der es auf eine von einem Benutzer gewünschte Lautstärke verstärkt und anschließend über den Lautsprecher 11 ausgibt. Von dem Mikrophon 8 empfangene Audiosignale werden ebenfalls bei einer entsprechenden Stellung des Umschalters 24 durch die Filtereinheit 2 in Abhängigkeit von einem Störsignal gefiltert und anschließend an die Merkmalserkennungsvorrichtung 13 weitergeleitet. Die Merkmalserkennungsvorrichtung 13 analysiert die von dem Mikrophon 8 aufgenommenen Geräusche und gibt erkannte Sprachmerkmale über die dritte Datenverbindung 14 an die Spracherkennungsvorrichtung 16 weiter. Die Spracherkennungsvorrichtung 16 analysiert die aufgenommenen Signale und gibt Anweisungen an die Recheneinheit 17 der Navigationsvorrichtung 15 weiter. Insbesondere werden über das Mikrophon 8 von einem Benutzer gewünschte Fahrziele in die Navigationsvorrichtung 15 eingegeben. Die Recheneinheit 17 der Navigationsvorrichtung 15 berechnet in Abhängigkeit von einer über den GPS-Empfänger 20 (GPS = Global Position System) ermittelten aktuellen Position des Fahrzeugs und dem über das Mikrophon 8 eingegebenen Fahrziel eine optimale Fahrtroute von der aktuellen Position zu dem eingegebenen Fahrziel. Die Recheneinheit 17 greift hierzu auf eine in der Speichereinheit 19, vorzugsweise ein CD-ROM-Laufwerk, abgelegten digitalen Straßenkarte mit einem gespeicherten Straßen- und Wegenetz zu. Ein von der Navigationsvorrichtung 15 vorgeschlagener Fahrweg wird in der Anzeige 18 graphisch dargestellt. Über eine vierte Datenverbindung 22 kann auch ein Audiosignal von der Navigationsvorrichtung an die Zentraleinheit 1 übermittelt werden, mit dem eine Fahranweisung über den Lautsprecher 11 an einen Benutzer ausgegeben wird.

Wird ein von der Audioeinheit 3 ausgegebenes Audiosignal oder eine Fahranweisung von der Navigationsvorrichtung 15 ausgegeben, so wird in einem bevorzugten Ausführungsbeispiel das Mikrophon 8 aktiviert und die Filterung über den Umschalter 24 auf eine Filterung des von dem Mikrophon 8 erfassten Audiosignals geschaltet. Der Umschalter 24 ist in einem bevorzugten Ausführungsbeispiel in die Filtereinheit 2 integriert. Ferner kann der Umschalter 24 jedoch auch als ein zusätzlicher Baustein, vorzugsweise als ein Halbleiterbaustein, ausgeführt sein. Über das Mikrophon 8, das sich bei einer Anordnung in einem Kraftfahrzeug vorzugsweise vor dem Fahrer oder im Bereich einer Mittelkonsole des Fahrzeugs befindet, werden dann Geräusche im Fahrzeuginnenraum erfasst. In einem bevorzugten Ausführungsbeispiel werden die aufgenommenen Geräusche hinsichtlich der auftretenden Frequenzen analysiert und ein Frequenzspektrum der Geräusche wird erfasst. In einem bevorzugten Ausführungsbeispiel wird hierzu ein aufgenommenes Geräuschsignal in vorgegebene Zeitintervalle unterteilt, wobei die einzelnen Zeitintervalle fouriertransformiert werden. Aus dem Spektrum der aufgenommenen Geräusche werden diejenigen Frequenzbereiche betrachtet, in denen eine Amplitude einen vorgegebenen Wert überschreitet. Diese Bereiche werden als Störungsbereiche erkannt und ein von der Audioeinheit 3 beziehungsweise der Navigationsvorrichtung 15 an die Zentraleinheit 1 und die Filtereinheit 2 übermitteltes Audiosignal wird in diesen Frequenzbereichen verstärkt ausgegeben. Wird die Lautstärke eines Störsignals zu groß, so muss zunächst die Gesamtlautstärke des Audiosignals von der Audioeinheit 3 beziehungsweise der Navigationsvorrichtung 15 angehoben werden. In einem bevorzugten Ausführungsbeispiel ist zur Ermittlung einer Gesamtlautstärke die Zentraleinheit 1 mit dem Fahrsignalsensor 12 verbunden. In einem bevorzugten Ausführungsbeispiel ist der Fahrsignalsensor 12 ein Motordrehzahlsensor. In Abhängigkeit von der Motordrehzahl ist in der Filtereinheit 2 jeder Motordrehzahl ein Störgeräusch zugeordnet. In Abhängigkeit von dem Störgeräusch wird dabei die Lautstärke des auszugebenden Audiosignals geändert. Hierzu ist die Filtereinheit 2 in einem bevorzugten Ausführungsbeispiel über eine Steuerleitung 23 mit dem Verstärker 10 verbunden. In einem weiteren Ausführungsbeispiel kann in einem Speicher der Filtereinheit 2 für eine Drehzahl auch ein zugehöriges Frequenzspektrum eines Störgeräusches abgelegt sein, so dass eine Verstärkung eines Audiosignals in bestimmten Frequenzbereichen in Abhängigkeit von der Motordrehzahl erfolgen kann. Wird mittels der Taste 21 auf eine Spracheingabe umgeschaltet, so wird auch der Umschalter 24 geschaltet und das Mikrophon 8 wird ebenfalls aktiviert. Ein zuvor über das Mikrophon 8 aufgenommenes Störsignal wird, wie oben erläutert, hinsichtlich seines Frequenzspektrums untersucht. In den Frequenzbereichen, in denen das Störsignal eine vorgegebene Amplitude überschreitet, wird das nun von dem Mikrophon 8 aufgenommene Sprachsignal abgeschwächt oder sogar ganz ausgeblendet. Hierdurch können diese Störungen aus dem mit dem Mikrophon aufgenommen Audiosignal eliminiert werden. In einem weiteren Ausführungsbeispiel ist auch möglich, während einer Spracheingabe das Audiosignal der Audioeinheit 3 ungefiltert über den Lautsprecher 11 auszugeben und das Signal der Audioeinheit 3 als Störsignal gegenüber der Eingabe über das Mikrophon 8 zu verwenden. In einem weiteren Ausführungsbeispiel ist es möglich, die Eingabe über das Mikrophon 8 lediglich, wie oben erläutert, in Abhängigkeit von dem Fahrsignal das von dem Mikrophon 8 ermittelte Audiosignal mittels der Filtereinheit 2 zu filtern. Eine Erfassung des Störsignals kann dabei während einer Spracheingabe und während einer Sprachausgabe durch die gleichen Schaltungen der vorzugsweise als Halbleiterbaustein ausgeführten Filtereinheit 2 erfolgen. Die Filtereinheit 2 ist dabei vorzugsweise als ein digitaler Signalprozessor ausgeführt. Die von dem Mikrophon 8 an die Filtereinheit 2 übermittelten Audiosignale werden durch einen in der Figur 1 nicht dargestellten Analog/Digital-Wandler hierfür umgewandelt. Für die Ausgabe an den Lautsprecher 11 ist ebenfalls ein Digital/Analog-Wandler, erforderlich, der in der Figur 1 ebenfalls nicht dargestellt ist.

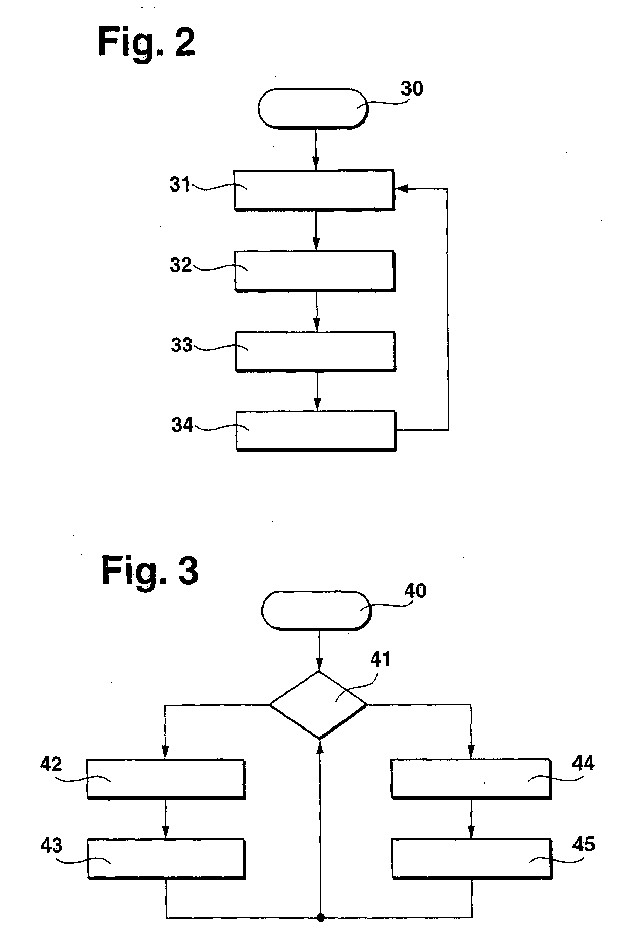

In der Figur 2 ist eine erfindungsgemäße Ermittlung einer Filterung für ein Audiosignal dargestellt. Das in der Figur 2 dargestellte Verfahren zur Ermittlung einer Filterung kann dabei sowohl für die Filterung eines auszugebenden Audiosignals, als auch für die Filterung eines aufgenommen Audiosignals verwendet werden. Ausgehend von einem Initialisierungsschritt 30 wird in einem Erfassungsschritt 31 für ein vorgegebenes Zeitintervall ein Störsignal erfasst, z.B. während der Ausgabe eines Audiosignals der Audioeinheit 3 ein über das Mikrophon 8 erfasstes Störgeräusch. In einem anschließenden spektralen Ermittlungsschritt 32 wird das Frequenzspektrum des ermittelten Störsignals bestimmt. In einem anschließenden Bewertungsschritt 33 werden diejenigen Frequenzbereiche festgelegt, in denen das Störsignal eine vorgegebene Amplitude überschreitet und die daher besonders zu verstärken bzw. abzuschwächen sind. In einem anschließenden Filterschritt 34 wird je nach Stellung des Umschalter 24 durch die Filtereinheit 2 ein von der Audioeinheit 3 über die erste Datenverbindung 7 übermitteltes Audiosignal verstärkt bzw. ein von dem Mikrophon 8 aufgenommenes Audiosignal abgeschwächt. Die Filterparameter bzw. die Parameter für deren Berechnung in Abhängigkeit von einem Störsignal sind vorzugsweise in der Filtereinheit 2 gespeichert. Dabei werden vorzugsweise in Abhängigkeit von der Stellung des Umschalters 24 unterschiedliche Filterparameter verwendet, die an das jeweilige zu filternde Signal angepasst sind, z.B. hinsichtlich eines Nutz-Freqeunzbereiches oder einer maximalen, möglichen Amplitude. Danach wird zu dem Ermittlungsschritt 32 zurück verzweigt. So lange eine Audioausgabe oder eine Spracheingabe erfolgt, läuft das in der Figur 2 dargestellte Verfahren ab.

Eine Filterung eines Audiosignals ist in der Figur 3 detailliert dargestellt. Ausgehend von einem Initialisierungsschritt 40 wird in einem Entscheidungsschritt 41 überprüft, ob eine Audioausgabe oder eine Spracheingabe erfolgt, vorzugsweise in dem ein Zustand des Umschalters 24 abgefragt wird. Erfolgt eine Audioausgabe, so wird in dem ersten Filterschritt 42 gemäß dem Verfahren nach der Figur 2 ermittelt, in welchen Frequenzbereichen ein nennenswertes Störsignal vorliegt, das in den jeweiligen Frequenzbereichen eine vorgebbare Amplitude überschreitet, und das Audiosignal wird in diesen Frequenzbereichen verstärkt. Eine Verstärkung erfolgt vorzugsweise um einen Faktor zwischen 2 und 10. In einem anschließenden ersten Ausgabeschritt 43 wird das Audiosignal von der Filtereinheit 2 an den Verstärker 10 ausgegeben.

Danach wird zu dem Entscheidungsschritt 41 zurück verzweigt und es wird z.B. geprüft, ob in der Zwischenzeit die Taste 21 gedrückt wurde bzw. ob der Umschalter 24 seinen Zustand gewechselt hat. Wird in dem Entscheidungsschritt 41 festgestellt, dass die Taste 21 gedrückt wurde und damit eine Spracheingabe gewünscht wurde, so wird zu dem zweiten Filterschritt 44 weiterverzweigt. In dem zweiten Filterschritt wird ebenso gemäß der Figur 2 ein Störsignal ermittelt und das durch das Mikrophon aufgenommene Audiosignal wird in den Frequenzbereichen des Störsignals abgeschwächt. Eine Abschwächung erfolgt vorzugsweise um einen Faktor zwischen 10 und 1000. Danach wird zu dem zweiten Ausgabeschritt 45 weiterverzweigt, in dem ein über das Mikrophon aufgenommenes Sprachsignal an die Merkmalserkennungsvorrichtung 13 zur weiteren Spracherkennung weitergeleitet wird. Anschließend wird ebenfalls zu dem Entscheidungsschritt 41 zurück verzweigt, in dem geprüft wird, ob nun wieder eine Audioausgabe gewünscht wird bzw. ob der Zustand des Umschalters 24 gewechselt hat. Zu einer Audioausgabe kann z.B. umgeschaltet werden, wenn über einen vorgegebenen Zeitraum kein Sprachsignal mehr erfasst wurde oder die Taste 21 erneut gedrückt wurde.

## Patentansprüche

1. Verfahren zur Verarbeitung von Audiosignalen, wobei einer Filtereinheit die Audiosignale einer ersten und einer zweiten Audiosignalquelle zugeführt werden, **dadurch gekennzeichnet, dass** die Audiosignale auf einen Umschalter gegeben werden und dass je nach Zustand des Umschalters entweder das Audiosignal der ersten Audiosignalquelle oder das Audiosignal der zweiten Audiosignalquelle in Abhängigkeit von einem Störsignal gefiltert wird.

2. Verfahren nach einem der vorhergehenden Ansprüche, **dadurch gekennzeichnet, dass** ein Frequenzspektrum des Störsignals ermittelt wird.

3. Verfahren nach Anspruch 2, **dadurch gekennzeichnet, dass** in Frequenzbereichen des Störsignals ein auszugebendes Audiosignal verstärkt wird.

4. Verfahren nach einem der vorhergehenden Ansprüche, **dadurch gekennzeichnet, dass** die Filterparameter in Abhängigkeit von der Stellung des Umschalters gewählt werden.

5. Verfahren nach einem der vorhergehenden Ansprüche, **dadurch gekennzeichnet, dass** das Störsignal über ein Mikrophon erfasst wird.

6. Verfahren nach einem der vorhergehenden Ansprüche, **dadurch gekennzeichnet, dass** die ersten Audiosignalquelle als ein Mikrophon ausgeführt wird.

7. Verfahren nach einem der vorhergehenden Ansprüche, **dadurch gekennzeichnet, dass** ein erfasstes Audiosignal in Frequenzbereichen des Störsignals abgeschwächt wird.

8. Verfahren nach einem der vorhergehenden Ansprüche, **dadurch gekennzeichnet, dass** als ein Störsignal ein Fahrsignal eines Fahrzeugs erfasst wird.

9. Verfahren nach einem der vorhergehenden Ansprüche, **dadurch gekennzeichnet, dass** erste Audiosignale für eine Spracheingabe und zweite Audiosignale für eine Audioausgabe erfasst werden und dass mit einer Taste von der Audioausgabe auf die Spracheingabe umgeschaltet wird.

10. Verfahren nach einem der vorhergehenden Ansprüche, **dadurch gekennzeichnet, dass** die Lautstärke eines auszugebenden Audiosignals in Abhängigkeit von dem Störsignal gewählt wird.

11. Verfahren nach einem der vorhergehenden Ansprüche, **dadurch gekennzeichnet, dass** die Audiosignale digital gefiltert werden.

12. Verfahren nach einem der vorhergehenden Ansprüche, **dadurch gekennzeichnet, dass** mit hoher Frequenz zwischen einer Filterung des Audiosignals der ersten und des Audiosignals der zweiten Audiosignalquelle gewechselt wird.

13. Vorrichtung zur Verarbeitung von Audiosignalen mit einer ersten Audiosignalquelle (3), mit einer zweiten Audiosignalquelle (8) und mit einer Filtereinheit (2) zur Filterung eines Audiosignal in Abhängigkeit von einem Störsignal, **gekennzeichnet durch** einen Umschalter (24) zu einem Umschalten zwischen dem Audiosignal der ersten und der zweiten Audiosignalquelle in der Weise, dass je nach Zustand des Umschalters (24) entweder das Audiosignal der ersten Audiosignalquelle (3) oder das Audiosignal der zweiten Audiosignalquelle (8) von der Filtereinheit (2) in Abhängigkeit von dem Störsignals gefiltert wird.

14. Vorrichtung nach Anspruch 13, **dadurch gekennzeichnet, dass** die Vorrichtung in einem Halbleiterbaustein, vorzugsweise einem digitalen Signalprozessor integriert ist.

## Claims

1. Method for processing audio signals, where a filter unit is supplied with the audio signals from a first and from a second audio signal source, **characterized in that** the audio signals are passed to a changeover switch and **in that**, depending on the state of the changeover switch, either the audio signal from the first audio signal source or the audio signal from the second audio signal source is filtered on the basis of a noise signal.

2. Method according to Claim 1, **characterized in that** a frequency spectrum is ascertained for the noise signal.

3. Method according to Claim 2, **characterized in that** an audio signal which is to be output is amplified in frequency ranges of the noise signal.

4. Method according to one of the preceding claims, **characterized in that** the filter parameters are chosen on the basis of the position of the changeover switch.

5. Method according to one of the preceding claims, **characterized in that** the noise signal is recorded using a microphone.

6. Method according to one of the preceding claims, **characterized in that** the first audio signal source is produced as a microphone.

7. Method according to one of the preceding claims, **characterized in that** a recorded audio signal is attenuated in frequency ranges of the noise signal.

8. Method according to one of the preceding claims, **characterized in that** a driving signal from a vehicle is recorded as a noise signal.

9. Method according to one of the preceding claims, **characterized in that** first audio signals for voice input and second audio signals for audio output are recorded, and **in that** a key is used to change over from the audio output to the voice input.

10. Method according to one of the preceding claims, **characterized in that** the volume of an audio signal which is to be output is chosen on the basis of the noise signal.

11. Method according to one of the preceding claims, **characterized in that** the audio signals are filtered digitally.

12. Method according to one of the preceding claims, **characterized in that** a high frequency is used to change between filtering of the audio signal from the first audio signal source and of the audio signal from the second audio signal source.

13. Apparatus for processing audio signals having a first audio signal source (3), having a second audio signal source (8) and having a filter unit (2) for filtering an audio signal on the basis of a noise signal, **characterized by** a changeover switch (24) for changing over between the audio signal from the first and the audio signal from the second audio signal source such that, depending on the state of the changeover switch (24), either the audio signal from the first audio signal source (3) or the audio signal from the second audio signal source (8) is filtered by the filter unit (2) on the basis of the noise signal.

14. Apparatus according to Claim 13, **characterized in that** the apparatus is integrated in a semiconductor chip, preferably a digital signal processor.

## Revendications

1. Procédé de traitement de signaux audio, dans lequel une unité de filtration reçoit les signaux audio d'une première et d'une deuxième source de signaux audio,
**caractérisé en ce qu'**
on amène les signaux audio sur un commutateur, et selon l'état du commutateur, on filtre en fonction d'un signal parasite soit le signal audio de la première source de signaux audio, soit le signal audio de la deuxième source de signaux audio,.

2. Procédé selon l'une des revendications précédentes,
**caractérisé en ce qu'**
on détermine un spectre de fréquence du signal parasite.

3. Procédé selon la revendication 2,
**caractérisé en ce que**
dans les plages de fréquence du signal parasite, on amplifie un signal audio à émettre.

4. Procédé selon l'une des revendications précédentes,
**caractérisé en ce qu'**
on choisit les paramètres de filtration en fonction de la position du commutateur.

5. Procédé selon l'une des revendications précédentes,
**caractérisé en ce que**
le signal parasite est enregistré avec un microphone.

6. Procédé selon l'une des revendications précédentes,
**caractérisé en ce que**
la première source de signaux audio est un microphone.

7. Procédé selon l'une des revendications précédentes,
**caractérisé en ce qu'**
on affaiblit le signal audio enregistré dans les plages de fréquence du signal parasite.

8. Procédé selon l'une des revendications précédentes,
**caractérisé en ce que**
le signal de parasite est un signal de conduite d'un véhicule enregistré.

9. Procédé selon l'une des revendications précédentes,
**caractérisé en ce qu'**
on saisit des premiers signaux audio pour une entrée vocale et des deuxièmes signaux audio pour une sortie audio, et à l'aide d'une touche, on passe de la sortie audio à l'entrée vocale.

10. Procédé selon l'une des revendications précédentes,
**caractérisé en ce que**
l'intensité sonore d'un signal audio à émettre est choisie en fonction du signal parasite.

11. Procédé selon l'une des revendications précédentes,
**caractérisé en ce que**
les signaux audio sont filtrés numériquement.

12. Procédé selon l'une des revendications précédentes,
**caractérisé en ce qu'**
à une fréquence plus élevée, on commute entre une filtration du signal audio de la première source de signaux audio et une filtration du signal audio de la deuxième source de signaux audio.

13. Dispositif de traitement de signaux audio comprenant une première source de signaux audio (3), une deuxième source de signaux audio (8) et une unité de filtration (2) pour la filtration d'un signal audio en fonction d'un signal parasite,
**caractérisé par**
un commutateur (24) permettant de commuter entre le signal audio de la première ou de la deuxième source de signaux audio, de telle manière que selon l'état du commutateur (24), soit le signal audio de la première source de signaux audio (3), soit le signal audio de la deuxième source de signaux audio (8), est filtré par l'unité de filtration (2) en fonction du signal parasite.

14. Dispositif selon la revendication 13,
**caractérisé en ce que**
le dispositif est intégré dans un composant semi-conducteur, de préférence un processeur de signaux numérique.
